# EUROPÄISCHE PATENTSCHRIFT

(11) **EP 0 730 958 B1**
(45) Veröffentlichungstag und Bekanntmachung des Hinweises auf die Patenterteilung: **02.09.1998**
(21) Anmeldenummer: 96102049.2
(22) Anmeldetag: 13.02.1996
(51) Int. Cl.: B41F 33/00, F16P 3/08, B41F 33/12

(54) **Sicherheitseinrichtung für eine Druckmaschine**
Security device for a printing machine
Dispositif de sécurité pour une machine d'impression

(30) Priorität: 07.03.1995 DE 19507992
(43) Veröffentlichungstag der Anmeldung: 11.09.1996
(73) Patentinhaber: MAN Roland Druckmaschinen AG, 63075 Offenbach (DE)
(72) Erfinder: Schwinn, Klaus, D-63150 Heusenstamm (DE); Klingler, Horst, D-63165 Mühlheim (DE)
(74) Vertreter: Marek, Joachim, Dipl.-Ing.

(56) Entgegenhaltungen:
- EP-A- 0 182 080
- DE-A- 2 854 672
- DE-A- 2 914 152
- DE-A- 3 226 812
- DE-B- 1 588 910
- DE-B- 2 430 536

## Beschreibung

Die Erfindung betrifft eine Sicherheitseinrichtung für eine Druckmaschine, insbesondere Bogenoffsetdruckmaschinen gemäß dem Oberbegriff von Anspruch 1.

Bogenoffsetdruckmaschinen weisen an einer Vielzahl von Stellen elektrisch abgesicherte Verschutzungen auf, welche insbesondere die Aufgabe haben, Verletzungen zu vermeiden, die dadurch entstehen können, daß in bewegte Maschinenteile gegriffen wird. Bei den elektrisch abgesicherten Verschutzungen unterscheidet man zwischen äußeren und inneren Verschutzungen. Unter äußeren Verschutzungen sind dabei z.B. Klapptritte zwischen den Druckwerken oder Schiebeschutze an- und auslegerseitig an den Druckwerken zu verstehen. Die mit diesen Verschutzungseinrichtungen gekoppelten Endschalter sind dabei mit einer Schaltung verbunden, welche bei Maschinenlauf die Druckmaschine sofort stillsetzt. Die Schaltung steht dazu mit dem Hauptantrieb der Druckmaschine in entsprechender Wirkverbindung. Wird bei Stillstand der Druckmaschine einer dieser äußeren Verschutzungen geöffnet, so sind nur Laufkommandos mit niedriger Drehzahl wie Schleichgang bzw. Tippen-vorwärts möglich. Diese Laufkommandos mit verminderter Drehzahl dienen beispielsweise dem manuellen Waschen eines Zylinders.

Unter den inneren Verschutzungen versteht man insbesondere die elektrisch abgesicherten Schaltleisten bzw. Einlaufschutze vor Walzenspalten. Ein Auslenken einer solchen Schaltleiste bzw. eines Einlaufschutzes bewirkt dabei über den entsprechenden Endschalter das sofortige Stillsetzen der Maschine. Das Auslenken kann beispielsweise dadurch verursacht sein, daß eine Bedienperson beim manuellen Waschen eines Druckwerkzylinders den entsprechenden Schutz berührt. Die Elemente der inneren Verschutzung sind dabei nur dann zugänglich wenn zuvor eine äußere Verschutzung geöffnet worden ist, weswegen auch nur Laufkommandos mit verminderter Geschwindigkeit möglich sind.

Bei inneren Verschutzungen ist es ebenfalls bekannt, diese Elemente in einer Doppelfunktion zu verwenden, d.h. bei geschlossener äußerer Verschutzung werden diese beispielsweise zu Bogenführungszwecken in eine bestimmte Stellung verschwenkt, wobei bei Öffnen eines zugeordneten äußeren Schutzelementes die Schaltleiste in die für den Personenschutz vorgesehene Stellung schwenkt. Dazu ist die Schaltleiste bzw. der Einlaufschutz mechanisch mit beispielsweise dem Klapptritt gekoppelt. Sowohl der Klapptritt als auch die Schaltleiste sind über Steuerkurven bzw. Nockenscheiben mit je einem Endschalter abgesichert, so daß beim Öffnen des Klapptrittes ein Maschinenstillstand ausgelöst bzw. die Freigabe von Laufkommandos bewirkt wird und über den der Schaltleiste zugeordneten Endschalter bei deren Betätigung in der Sicherungsstellung ebenfalls ein Maschinenstopp ausgelöst wird. Beschrieben ist eine derartige Verschutzungseinrichtung bspw. in der nicht vorveröffentlichten DE-P 195 00 586 bzw. der EP-A-0 726 145, veröffentlicht am 14.08.96.

Nachteilig bei der zuvor bekannten Art der Kopplung eines äußeren und inneren Verschutzungselementes nebst entsprechender elektrischer Absicherung ist, daß hier Manipulationen möglich sind, welche ein Anlaufen der Maschine insbesondere mit hoher Geschwindigkeit nicht verhindern. So kommt es bei Servicearbeiten oder Testzwecken häufig vor, daß ein äußerer Schutz, welcher mit einer inneren Verschutzung mechanisch gekoppelt ist, geöffnet wird und der dem äußeren Schutz zugeordnete Endschalter dahingehend manipuliert wird, so daß die diesen Endschalter überwachende Steuerung trotzdem ein Signal empfängt, welches einem geschlossen äußeren Schutz entspricht. Da durch das Öffnen des äußeren Schutzes durch die mechanische Kopplung der innere Schutz in seine für den Personenschutz vorgesehene Stellung verschwenkt worden ist, geht nun eine Bedienperson davon aus, daß diese Stelle elektrisch abgesichert ist. Ein Verschwenken dieser Schaltleiste führt aber zu keinem Maschinenstopp, da wegen des manipulierten und dem äußeren Schutz zugeordneten Endschalters der uneingeschränkte Maschinenlauf möglich ist und sich die Schaltleiste in einer Position befindet, welche sie bei geschlossenen äußeren Schutz im Normalfall garnicht einnimmt.

Aus der DE-A-2 914 152 ist eine Sicherheitseinrichtung an Bogenrotationsdruckmaschinen zum Absichern eines Walzenspaltes, insbesondere zwischen Druck- und Gummizylinder bekannt. Durch zwei mittels einem Scharniergelenk miteinander verbundenen Bleche als innere Verschutzungselemente wird ein Zylinder bzw. ein Walzenspalt abgesichert.

Aus der DE-B-2 430 536 ist eine Einrichtung zur Sicherung von Schutzgittern bzw. Schutzabdeckungen an Druckmaschinen bekannt. Vorgesehen ist hier ein Schalter, über den beim Öffnen des Schutzgitters bzw. der Schutzabdeckung die Druckmaschine abgestellt wird. Durch einen weiteren mit dem ersten Schaltkontakt gekoppelten zweiten Schaltkontakt ist ein Betriebsschalter zum Betrieb der Druckmaschine zuschaltbar. Das Öffnen eines Schutzgitters (äußere Verschutzung) hat damit zunächst einmal die Folge, daß die Maschine abgestellt wird. Bei geöffnetem Schutzgitter kann durch Betätigung des Betriebsschalters die zur Einstellungen notwendige Inbetriebsetzung der Maschine vorgenommen werden.

Aus der DE-B-1 588 910 ist eine Schaltungsanordnung an Druckmaschinen zum Schutze des Bedienenden gegen Verletzungen bekannt, bei der Betriebsschalter mit ODER-Gliedern verbunden sind, um die Betriebsvarianten 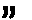 Lauf" und 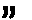 Tippen unbegrenzt" zu realisieren.

Aus der EP-A-0 182 080 ist eine Sicherheitseinrichtung an Bogenrotationsdruckmaschinen bekannt, bei der ein äußeres Verschutzungselement mechanisch mit einem inneren Verschutzungselement gekoppelt ist. Die Stellung beider Schutzelemente wird durch Endschalter als elektrische Absicherung überwacht. Die mechanische Kopplung zwischen den beiden Verschutzungselementen ist dabei dergestalt, daß bei Öffnen des äußeren Verschutzungselementes das innere Verschutzungselement von einer den Bogenlauf freigebenden in eine den Zylinder bzw. den Zylinderspalt absichernde Position verschwenkt wird.

Aufgabe der vorliegenden Erfindung ist es daher, eine Sicherheitseinrichtung gemäß dem Oberbegriff von Anspruch 1 derartig weiterzubilden, so daß in bautechnisch einfacher Weise ein Personenschutz auch bei manipulierten Verschutzungseinrichtungen gewährleistet ist.

Gelöst wird diese Aufgabe durch die kennzeichnenden Merkmale von Anspruch 1. Weiterbildungen der Erfindung ergeben sich aus dem Unteranspruch.

Gemäß der Erfindung ist vorgesehen, daß die Steuerung, welche mit den Endschaltern der Druckmaschine in Wirkverbindung steht, bei Signalen, welche auf einen nicht vorgesehenen Bedienvorgang schließen lassen, die Maschine über deren Hauptantrieb gegen ein Anlaufen sperrt. Diese Art der Überwachung der elektrisch abgesicherten Verschutzungen findet dabei bei miteinander gekoppelten äußeren und inneren Verschutzungselementen Anwendung. Dadurch ist gewährleistet, daß bei Öffnen eines äußeren Verschutzungselementes und nach Manipulation des zugeordneten Endschalters die Druckmaschine gegen ein Anlaufen gesperrt ist. Durch die erfindungsgemäße Ausbildung der mit den entsprechenden Endschalter in Wirkverbindung stehenden Steuerung wird insbesondere vermieden, daß zusätzliche Sensoren, Endschalter oder sonstige Signalgeber für derartige Fälle vorzusehen sind.

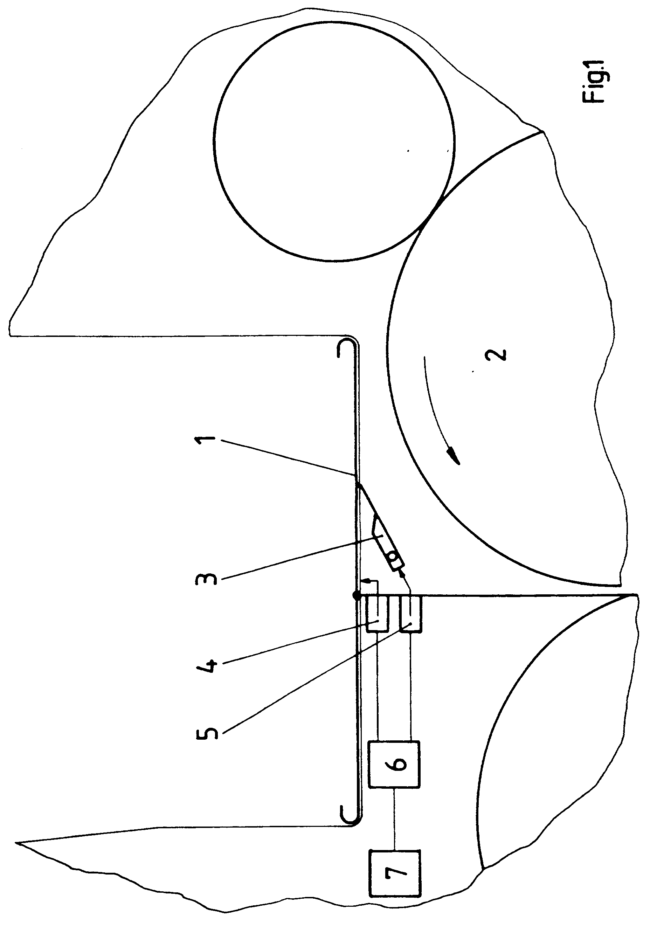

Des weiteren erfolgt die Erläuterung eines Ausführungsbeispieles der Erfindung anhand der Zeichnungen. Die Figuren 1 bis 3 zeigen dabei einen mechanisch mit einer Schaltleiste gekoppelten Klapptritt, wobei bei Öffnen des Klapptrittes die Schaltleiste aus einer weggeschwenkten in eine dem Personersschutz zugeordneten Stellung geschwenkt wird.

Fig. 1 zeigt den Durchgang zwischen zwei Druckwerken einer Bogenoffsetdruckmaschine, wobei hier ein um eine parallel zur Achse eines Gegendruckzylinders 2 verlaufende Schwenkachse klappbarer Klapptritt 1 angeordnet ist. Der Klapptritt 1 ist zu insbesondere Reinigungsarbeiten am Gegendruckzylinder 2 zu öffnen. Über in den Figuren nicht dargestellte und an sich bekannte mechanische Kopplungselemente ist der Klapptritt 1 mit einer ebenfalls um eine parallel zur Achse des Gegendruckzylinders 2 verlaufenden Schwerkachse schwenkbare Schaltleiste 3 verbunden. Die Kopplung von Klapptritt 1 als äußere Verschutzung und Schaltleiste 3 als innere Verschutzung ist dabei dergestalt, daß im geschlossenen Zustand des Klapptrittes 1 die Schaltleiste 3 vom Gegendruckzylinder 2 weggeschwenkt ist, um den Bogenlauf nicht zu behindern, also insbesondere einen abschmierfreien Bogentransport auf dem Gegendruckzylinder 2 zu gewährleisten.

Dem Klapptritt 1 sowie der schwenkbar und mit dem Klapptritt 1 gekoppelten Schaltleiste 3 sind über ebenfalls nicht dargestellte und an sich bekannte Betätigungseinrichtungen Endschalter 4 und 5 zugeordnet, welche den Schließ- bzw. Betätigungszustand des Klapptritts 1 bzw. der Schaltleiste 3 erfaßt. Diese Endschalter 4, 5 sind dabei mit einer Steuerung 6 verbunden, deren Funktionsweise noch weiter unten stehend erläutert wird. Die Steuerung 6 steht ferner mit dem Hauptantrieb 7 der Druckmaschine in Wirkverbindung und löst je nach Schaltzustand der Endschalter 4, 5 den Maschinenstillstand aus bzw. sperrt den Hauptantrieb 7 gegen ein Anlaufen. Die Steuerung 6 steht dabei noch mit weiteren hier nicht dargestellten Endschaltern an den übrigen Elementen der inneren und äußeren Verschutzung der Druckmaschine in Wirkverbindung.

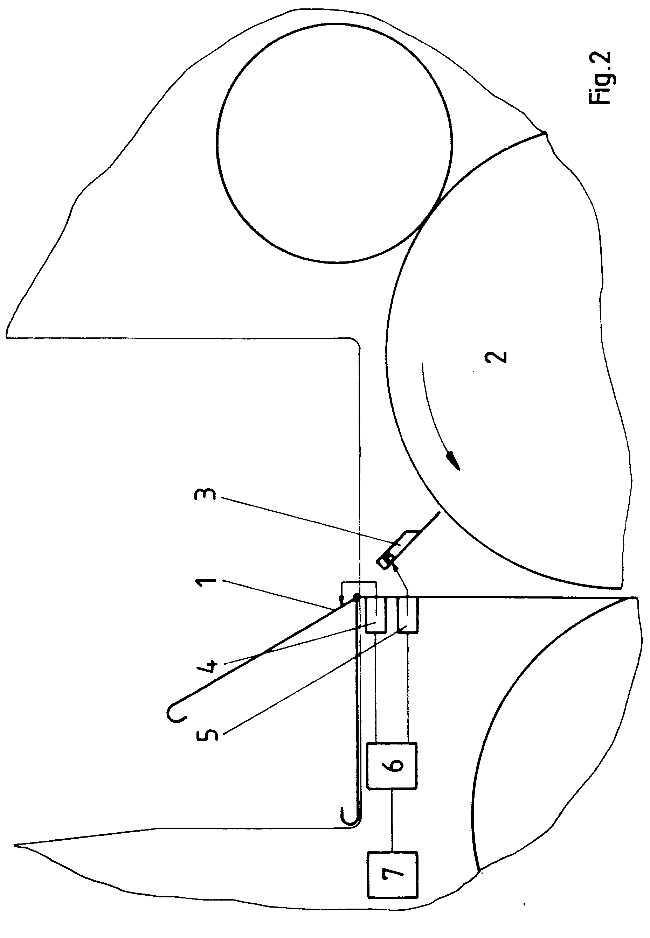

Gemäß der in Fig. 1 dargestellten Position von Klapptritt 1 und Schaltleiste 3 ist der uneingeschränkte Maschinenlauf möglich. Wird beispielsweise bei Maschinenstillstand der Klapptritt 1 geöffnet (Fig. 2), so bewirkt die Kopplung zwischen Klapptritt 1 und Schaltleiste 3, daß diese aus der dem Bogenlauf frei gegebenen Position in eine Absicherungsposition verschwenkt wird, also in eine Stellung, bei der deren schwenkbares Ende im geringen Abstand zum Gegendruckzylinder 2 steht. Da der Endschalter 4 die geöffnete Stellung des Klapptrittes 1 erfaßt sind nun nur Maschinenlaufkommandos mit geringer Drehzahl möglich. Dies wäre beispielsweise das Kommando Schleichgang zum manuellen Waschen der Oberfläche des Gegendruckzylinders 2.

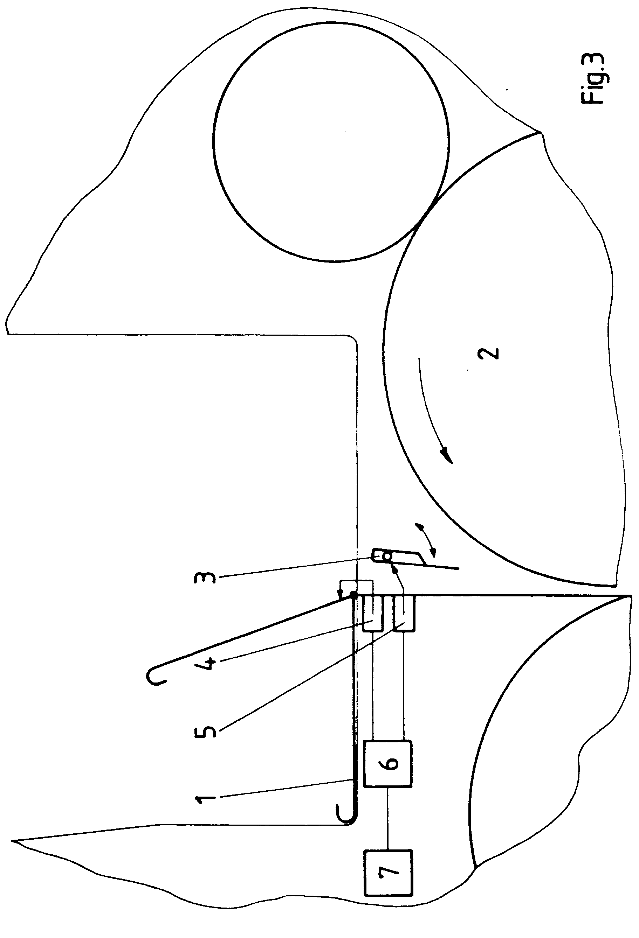

Wird beim Waschen des Gegendruckzylinders 2 die Schaltleiste 3 aus ihrer Normalstellung verschwenkt, so löst der diese Schwenkbewegung erfassende Endschalter 5 über die Steuerung 6 den sofortigen Maschinenstillstand aus (Fig. 3).

Gemäß den hier dargestellten Ausführungsbeispielen werden die Signale der Endschalter 4 und 5 mit den ausschließlichen ODER (XOR) verknüpft. Durch diese logische Verknüpfung ist gewährleistet, daß bei geschlossenem Klapptritt 1 und entsprechend abgeschwenkter Stellung der Schaltleiste 3 der uneingeschränkte Maschinenlauf möglich ist. Die Signale der Endschalter 4 und 5 werden dabei dergestalt gewertet, so daß das Signal des Endschalters 4 als logisch 1 und das Signal des Endschalters 5 als logisch 0 gewertet wird. Wird nun der Klappschutz 1 geöffnet, wobei gleichzeitig die Schaltleiste 3 in ihre Sicherungsposition verschwenkt wird, so wechselt das Signal des Endschalters 4 von logisch 1 auf logisch 0, wobei gleichzeitig durch entsprechende Gestaltung der mit der Schaltleiste 3 gekoppelten Kurve zur Betätigung des Endschalters 5 dessen Ausgangssignal von 0 auf 1 wechselt. Durch die XOR-Verknüpfung der beiden Signale der Endschalter 4 und 5 ändert sich das Ausgangssignal der logischen XOR-Verknüpfung nicht, d.h. es ist nach wie vor ein Maschinenlauf möglich, der durch die Steuerung 6 durch eine zusätzliche und an sich bekannte Überwachung des Endschalters 4 jedoch nur für Laufkommandos mit geringer Geschwindigkeit freigegeben wird.

Wird nun wie in der Fig. 3 dargestellt die Schaltleiste 3 betätigt, so bewirkt die nicht dargestellte und mit der Schaltleiste 3 gekoppelte Steuerkurve das Betätigen des Endschalters 5, so daß dessen Signal von logisch 1 auf logisch 0 wechselt. Über den Hauptantrieb 7 erfolgt ein sofortiges Stillsetzen der Druckmaschine beispielsweise während des Schleichganges.

Die logische XOR-Verknüpfung der Signale der Endschalter 4 und 5 durch die Steuerung 6 bewirkt nun aber, daß der folgend geschilderte manipulierte Fall nicht zu einer Personengefährdung führt. Hierbei sei angenommen, daß der Klapptritt 1 geöffnet wurde und durch eine Manipulation am Endschalter 4 dieser wieder ein Signal abgibt, welches dem geschlossenen Klappschutz 1 entspricht, von der Steuerung 6 also als logische 1 gewertet wird. Durch die mechanische Kopplung der Schaltleiste 3 mit dem Klapptritt 1 befindet sich die Schaltleiste 3 in der in Fig. 2 dargestellten Stellung. Die Steuerung 6 empfängt nun von den Endschaltern 4 und 5 jeweils ein als logisch 1 zu wertendes Signal, wobei das Ausgangssignal von Endschalter 4 wie bereits erwähnt durch Manipulation entstanden ist. Erfindungsgemäß ist nun vorgesehen, daß durch diese XOR-Verknüpfung in der Steuerung 6 ebenfalls die Maschine über den Hauptantrieb 7 gegen ein jegliches Anlaufen gesperrt wird. Die logische XOR-Verknüpfung führt in diesem manipulierten Fall zu dem gleichen Ausgangssignal, welche einen Maschinenstopp bewirkt bzw. einen jeglichen Maschinenanlauf verhindert.

### Bezugszeichenliste

- 1: Klapptritt
- 2: Gegendruckzylinder
- 3: Schaltleiste
- 4: Endschalter (Klapptritt 1)
- 5: Endschalter (Schaltleiste 3)
- 6: Steuerung
- 7: Hauptantrieb

## Patentansprüche

1. Sicherheitseinrichtung für eine Druckmaschine, insbesondere Bogenoffsetdruckmaschine, bestehend aus einer äußeren und einer damit mechanisch gekoppelten, beim Öffnen der äußeren Verschutzung (1) in eine absichernde Position verbringbaren inneren Verschutzung (3), einer der äußeren und inneren Verschutzung jeweils zugeordneten elektrisch abfragbaren Absicherung (4, 5) mit jeweils zweiwertigen Schaltsignalen, die einer mit dem Hauptantrieb (7) der Druckmaschine in Wirkverbindung stehenden Steuerung (6) zuführbar sind, wobei durch die Steuerung (6) den Schaltsignalen der Absicherungen (4, 5) entsprechend ein Ausführen bestimmter Laufkommandos sowie ein Sperren gegen ein Anlaufen auslösbar ist,
**dadurch gekennzeichnet**,
daß durch die Steuerung (6) bei einer Signalabgabe, welche dem geschlossenen äußeren Schutz (1) und dem in die Sicherungsposition verschwenkten inneren Schutz (3) entspricht, der Hauptantrieb (7) gegen ein Anlaufen gesperrt wird.

2. Sicherheitseinrichtung nach Anspruch 1,
**dadurch gekennzeichnet**,
daß die elektrischen Absicherungen (4, 5) der äußeren Verschutzung (1) und der damit mechanisch gekoppelten inneren Verschutzung (3) Signale abgeben, welche als logische 1 gewertet werden, wenn die äußere Verschutzung (1) geschlossen bzw. die innere Verschutzung (3) sich in der absichernden Stellung befindet und daß diese Signale nach einer logischen XOR-Verknüpfung ausgewertet werden, wobei bei einer logischen Null als Ausgangsgröße das Sperren des Hauptantriebes (7) gegen ein jegliches Anlaufen erfolgt.

## Claims

1. Security device for a printing press, particularly an offset sheet printing press, consisting of an exterior protection and an interior protection (3) mechanically linked therewith and which can be brought on opening the exterior protection (1) into a security position, an electronically interrogatable security devices (4, 5) arranged relative to the outer and inner protection in each case with in each case two-valued switching signals, which can be fed to a control (6) which is operatively connected with the main drive (7) of the printing press, wherein, by means of the control (6), the switching signals of the security devices (4, 5) corresponding to a carrying out of given running commands as well as a locking against running up can be triggered, characterised in that via the control (6) on a signal output which corresponds to the closed exterior protection (1) and to the interior protection (3) swivelled into the security position, the main drive (7) is locked against running up.

2. Security device according to Claim 1, characterised in that the electrical security devices (4, 5) of the exterior protection (1) and of the mechanically linked thereto inner protection (3) give out signals which are evaluated as logical 1 if the exterior protection (1) is closed or the interior protection (3) is located in the security position and that these signals are evaluated after a logical XOR combination, wherein, on a logic zero as an output value, the locking of the main drive (7) against any running up takes place.

## Revendications

1. Dispositif de sécurité pour une machine d'impression, en particulier une machine d'impression offset à feuilles, comportant un élément de protection (1) externe et un élément de protection (3) interne, coupé mécaniquement à celui-ci et pouvant être amené dans une position protégée lors de l'ouverture de l'élément de protection (1) externe, une protection (4,5) associée respectivement aux éléments de protection externe et interne, pouvant être interrogée électriquement et comportant à chaque fois des signaux de commande à double valeur, qui peuvent être fournis à une commande (6) qui est en liaison active avec l'entraînement principal (7) de la machine d'impression, une mise en oeuvre d'ordres de marche déterminés, correspondant aux signaux de commutation des protections (4,5), ainsi qu'un blocage contre un démarrage pouvant être déclenchés par la commande (6),
caractérisé en ce que, par la commande (6), l'entraînement principal (7) peut être bloqué contre un démarrage, lors de la génération d'un signal qui correspond à l'élément de protection (1) externe fermé et à l'élément de protection (3) interne, pivoté dans la position de sécurité.

2. Dispositif de sécurité selon la revendication 1,
caractérisé en ce que les protections électriques (4,5) de l'élément de protection (1) externe et de l'élément de protection (3) interne, coupé à celui-ci de façon mécanique, émettent des signaux qui prennent la valeur logique 1 lorsque l'élément de protection (1) externe est fermé ou lorsque l'élément de protection (3) interne se trouve dans la position de protection, et en ce que ces signaux sont évalués après une fonction logique OU, le blocage de l'entraînement principal (7) contre tout démarrage étant réalisé pour une valeur logique zéro comme valeur de sortie.
